# EUROPÄISCHE PATENTSCHRIFT

(11) **EP 3 543 643 B1**
(45) Veröffentlichungstag und Bekanntmachung des Hinweises auf die Patenterteilung: **13.05.2020**
(21) Anmeldenummer: 19152693.8
(22) Anmeldetag: 21.01.2019
(51) Int. Cl.: G01B 5/30, G01B 1/00, G01L 5/00, G01D 5/347, F03D 17/00

(54) **BAUEINHEIT ZUR ERFASSUNG VON VERFORMUNGEN UND WINDKRAFTANLAGE MIT EINER DERARTIGEN BAUEINHEIT**
UNIT FOR DETECTING DEFORMATIONS AND WIND TURBINE GENERATOR WITH SUCH A UNIT
COMPOSANT DESTINÉ À DÉTECTER DES DÉFORMATIONS ET ÉOLIENNE DOTÉE D'UN TEL COMPOSANT

(30) Priorität: 21.03.2018 DE 102018204349
(43) Veröffentlichungstag der Anmeldung: 25.09.2019
(73) Patentinhaber: Dr. Johannes Heidenhain GmbH, 83301 Traunreut (DE)
(72) Erfinder: SEVINC, Alper, 20149 Hamburg (DE)

(56) Entgegenhaltungen:
- DE-A1- 10 003 738
- DE-A1-102013 223 780
- DE-C1- 4 340 030
- US-B2- 7 059 822

## Beschreibung

### GEBIET DER TECHNIK

Die Erfindung betrifft eine Baueinheit zur Erfassung von Verformungen eines Bauteils, etwa einem Rotorblatt einer Windkraftanlage, gemäß dem Patentanspruch 1 sowie eine Windkraftanlage gemäß dem Anspruch 8.

Rotorblätter von Windkraftanlagen sind verschiedensten Kräften ausgesetzt, die naturgemäß zu Verformungen, insbesondere Torsionsverformungen, der Rotorblätter führen. Das Ausmaß der Verformungen von Rotorblättern einer Windenergieanlage ist jedenfalls nur schwer voraussagbar, weshalb Anstrengungen unternommen werden, diese als Ist-Werte zu erfassen.

Im Hinblick auf die Vorhersage von Ermüdungsschäden kann es vorteilhaft sein auf Basis der gemessenen Verformungen beziehungsweise Belastungen eine Information rückschauend über eine akkumulierte Belastung des Rotorblatts zu einem gewünschten Zeitpunkt zu erzeugen. Die Verfügbarkeit von derartigen Belastungswerten ist also im Hinblick auf kurzzeitige maximale Belastungen oder zu erwartende Ermüdungsschäden von Bedeutung. Außerdem kann in Kenntnis der Ist-Verformungen beziehungsweise Ist-Lasten die Regelung der Windkraftanlage optimiert werden, beispielsweise durch Verstellung der Pitch-Winkel.

Ein Rotorblatt weist häufig eine innere Trägerstruktur auf, die zur mechanischen Verstärkung der Außenhaut des Rotorblattes dient, so dass die Trägerstruktur zusammen mit der Außenhaut insbesondere unter Torsionsbeanspruchung verformt wird.

### STAND DER TECHNIK

Aus der US 7059822 B2 ist eine Baueinheit zur Erfassung von Verformungen eines Rotorblattes einer Windkraftanlage bekannt, bei der eine Messvorrichtung an einem Rahmenelement im Rotorblatt befestigt ist.

In der Offenlegungsschrift DE 10 2013 223 780 A1 der Anmelderin ist ein Messgerät zur Bestimmung von Dehnungen für ein Rotorblatt beschrieben. Das Messgerät verfügt über einen Arm, wobei auftretende Dehnungen über eine mechanische Ankopplung eines Winkelmessgerätes, dessen Drehachse orthogonal zum Arm orientiert ist, bestimmt werden können.

Aus der Offenlegungsschrift DE 100 03 738 A1 ist eine Drehmoment-Erfassungseinrichtung bekannt, die über zwei relativ zueinander drehbare Kodierscheiben verfügt, wobei bei Einleitung eines Drehmoments ein Torsionselement verformt wird.

### ZUSAMMENFASSUNG DER ERFINDUNG

Der Erfindung liegt die Aufgabe zugrunde, eine Baueinheit zur Erfassung von Verformungen eines Bauteils, etwa einem Rotorblatt einer Windkraftanlage, zu schaffen, welche vergleichsweise einfach ist und präzise arbeitet.

Diese Aufgabe wird erfindungsgemäß durch die Baueinheit mit den Merkmalen des Patentanspruchs 1 gelöst.

Demnach umfasst die Baueinheit eine Trägerstruktur und eine Messvorrichtung. Die Messvorrichtung weist eine erste Ausgleichskupplung, einen Stab und eine Winkelmesseinrichtung auf. Die erste Ausgleichskupplung ist drehsteif ausgebildet und der Stab weist eine Längsachse auf. Die Winkelmesseinrichtung umfasst eine erste Bauteilgruppe und eine zweite Bauteilgruppe, wobei die erste Bauteilgruppe relativ zur zweiten Bauteilgruppe um die Längsachse drehbar angeordnet ist. Die Winkelmesseinrichtung ist so ausgestaltet, dass durch diese eine relative Winkellage der beiden Bauteilgruppen zueinander messbar ist. Dabei ist die erste Ausgleichskupplung unmittelbar oder mittelbar mit der Trägerstruktur drehfest verbunden. Ferner ist der Stab unmittelbar oder mittelbar drehfest mit der ersten Ausgleichskupplung verbunden. Weiterhin ist die erste Bauteilgruppe drehfest mit dem Stab verbunden und die zweite Bauteilgruppe drehfest mit der Trägerstruktur verbunden, so dass durch Messung der relativen Winkellage der beiden Bauteilgruppen zueinander eine um die Längsachse durch mechanische Belastung hervorgerufene Torsion beziehungsweise Torsionsverformung der Trägerstruktur bestimmbar ist.

In weiterer Ausgestaltung der Erfindung ist der Stab aus einem Material hergestellt, welches Kunststoff umfasst, insbesondere kann der Kunststoff faserverstärkt sein.

Mit Vorteil weist die zweite Bauteilgruppe der Winkelmesseinrichtung eine zweite Ausgleichskupplung auf, wobei die zweite Ausgleichskupplung drehfest mit der Trägerstruktur verbunden ist.

Gemäß einer Weiterbildung der Erfindung weist die Winkelmesseinrichtung eine Maßverkörperung und ein Element zur Abtastung der Maßverkörperung auf. Die Maßverkörperung kann ringförmig ausgestaltet sein und ist dann geometrisch betrachtet ein Hohlzylinder mit umlaufenden Mantelseiten. Die Mantelseiten können eine geringe Höhe aufweisen, so dass die Maßverkörperung als Ringscheibe ausgestaltet ist mit ringförmigen parallel zueinander ausgerichteten Stirnflächen, die auch als Grund- oder Deckflächen bezeichnet werden können. Die Winkelskalierung oder Winkelcodierung kann auf einer der Stirnflächen aufgebracht sein.

Gerade wenn die Maßverkörperung so ausgestaltet ist, dass die Mantelseiten eine vergleichsweise größere Höhe aufweist, also bei einer eher trommelförmigen Maßverkörperung, kann die Winkelskalierung auf der Mantelseite aufgebracht sein. Die Maßverkörperung kann aber auch als Maßband ausgestaltet sein, welches beispielsweise an der Mantelseite eines zylindrischen Körpers an dessen Außenseite oder an dessen Innenseite befestigt wird.

Zudem kann die Maßverkörperung so ausgestaltet sein, dass diese nur über einen begrenzten Winkelbereich eine Skalierung aufweist, sich also nicht über 360° erstreckt, sondern nur ein Winkelsegment als Messbereich aufweist. Die winkelmäßige Erstreckung der Maßverkörperung kann auf den maximalen Messbereich beziehungsweise Schwenkwinkel abgestimmt sein.

Mit Vorteil ist das Element zur Abtastung der Maßverkörperung photosensitiv beziehungsweise lichtempfindlich ausgestaltet. Demgemäß beruht also eine derartige Abtastung auf einem optischen Prinzip.

Alternativ kann die Abtastung auf einem induktiven oder magnetischen Prinzip beruhen.

Die Winkelmesseinrichtung kann insbesondere digitale Positionssignale und / oder Signale, die durch ein- oder mehrmaliges differenzieren der Positionssignale nach der Zeit erzeugt worden sind, liefern. Die Übertragung der betreffenden Signale kann rein digital und seriell erfolgen, so dass eine vergleichsweise einfache Verarbeitung der Signale möglich ist, z. B. zur Einbindung in eine hochdynamische Regelung.

Die Winkelmesseinrichtung weist mit Vorteil eine Maßverkörperung mit einer absoluten Codierung auf, so dass durch die Winkelmesseinrichtung die relative Winkellage zwischen der ersten und der zweiten Bauteilgruppe als eine absolute Größe messbar ist (im Gegensatz zu einer inkrementalen Messung). Auf diese Weise kann zu beliebigen Zeitpunkten die absolute Verformung des Rotorblatts gemessen werden. Dies ist insbesondere zur Überprüfung von Setzungsvorgängen in der Struktur des Rotorblatts vorteilhaft.

Mit Vorteil weist die Baueinheit mehrere Messvorrichtungen auf, die insbesondere entlang der Längsachse zueinander versetzt angeordnet sind beziehungsweise entlang der Längsachse aneinander gereiht sind.

Ein weiterer Aspekt der Erfindung betrifft eine Windkraftanlage mit einem Rotorblatt, die eine erfindungsgemäße Baueinheit aufweist.

Mit Vorteil ist der Stab so im Rotorblatt montiert, dass dieser in Längsrichtung des Rotorblatts orientiert ist.

In weiterer Ausgestaltung der Erfindung weist der Stab den gleichen Wärmeausdehnungskoeffizienten auf wie das Rotorblatt.

Weitere vorteilhafte Ausgestaltungen der Erfindung sind den abhängigen Ansprüchen zu entnehmen.

Weitere Merkmale und Vorteile der Erfindung werden bei der nachfolgenden Beschreibung eines Ausführungsbeispiels anhand der Figuren deutlich werden.

### KURZE BESCHREIBUNG DER ZEICHNUNGEN

- Figur 1: eine schematische Ansicht eines Rotorblatts mit einer Baueinheit zur Erfassung von Verformungen,
- Figur 2: eine perspektivische Ansicht einer Baueinheit mit einer Trägerstruktur und einer Messvorrichtung zur Erfassung von Verformungen eines Rotorblatts,
- Figur 3: eine Schnittansicht einer Winkelmesseinrichtung als Bestandteil der Messvorrichtung.

### BESCHREIBUNG DER AUSFÜHRUNGSFORMEN

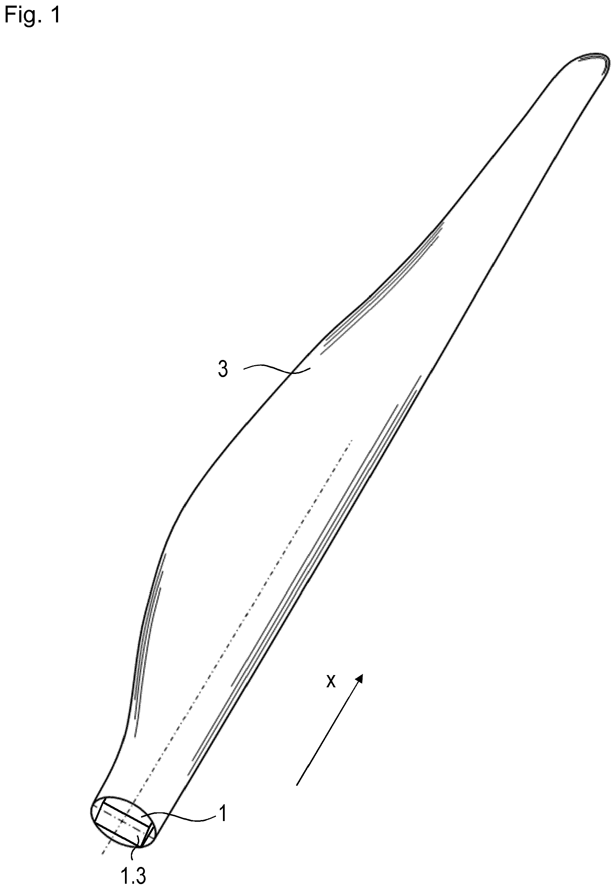

In der Figur 1 ist ein Rotorblatt 3 einer Windkraftanlage gezeigt, welches im vorgestellten Ausführungsbeispiel Bestandteil einer Windkraftanlage mit horizontaler Achse ist, die insbesondere insgesamt drei Rotorblätter 3 aufweist. Das Rotorblatt 3 weist eine Trägerstruktur 1 auf, die zur mechanischen Stabilisierung innerhalb des Rotorblatts 3 montiert ist und zur Versteifung des Rotorblatts 3 dient. Die Trägerstruktur 1 weist ein Schott 1.3 auf, das eine Begrenzungswand zur Nabe der Windkraftanlage darstellt.

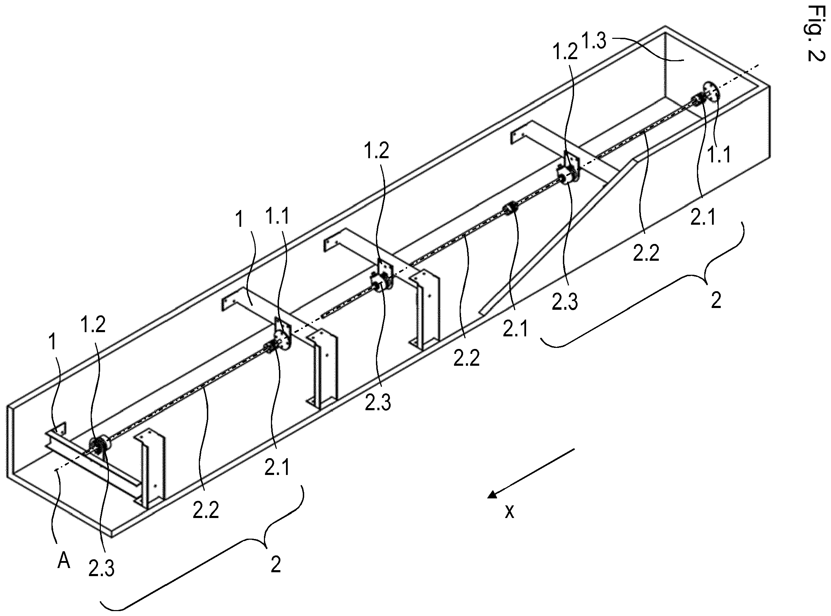

In der Trägerstruktur 1 ist eine Messvorrichtung 2 zur Erfassung von Verformungen des Rotorblatts 3 montiert, entsprechend der Ansicht gemäß der Figur 2, wobei dort zur besseren Veranschaulichung eine Wand der Trägerstruktur 1 in der Darstellung nicht vollständig gezeigt ist. Um eine Aussage über die Verformung des Rotorblatts 3 treffen zu können ist es vorteilhaft, wenn mehrere derartige Messvorrichtungen 2 zur Erfassung von Verformungen in der Trägerstruktur 1 montiert werden, wie in der Figur 2 dargestellt. Zur Befestigung einer jeweiligen Messvorrichtung 2 weist die Trägerstruktur 1 einen ersten Flansch 1.1 und einen zweiten Flansch 1.2 auf.

Die Messvorrichtung 2 umfasst eine erste Ausgleichskupplung 2.1, einen Stab 2.2 mit einer Längsachse A und eine Winkelmesseinrichtung 2.3, die auch als Drehgeber bezeichnet werden kann.

Im vorgestellten Ausführungsbeispiel ist die erste Ausgleichskupplung 2.1 als Metallbalgkupplung ausgestaltet. Alternativ kann hier auch beispielsweise eine Membrankupplung eingesetzt werden. Die erste Ausgleichskupplung 2.1 gleicht jedenfalls Axialbewegungen und Fluchtungsabweichungen (Radial- und Winkelversatz) zwischen dem Stab 2.2 und der Trägerstruktur 1 aus und ist aber torsionssteif. Die erste Ausgleichskupplung 2.1 kann am ersten Flansch 1.1 der Trägerstruktur 1 starr befestigt werden.

Der Stab 2.2 ist wie das Rotorblatt 3 aus glasfaserverstärktem Kunststoff hergestellt und weist die Längsachse A auf, die in Richtung x parallel zur Längsachse des Rotorblatts 3 orientiert ist. Der Stab 2.2 weist weiterhin eine erste Verbindungsstelle auf, die mit der ersten Ausgleichskupplung 2.1 drehfest verbunden ist.

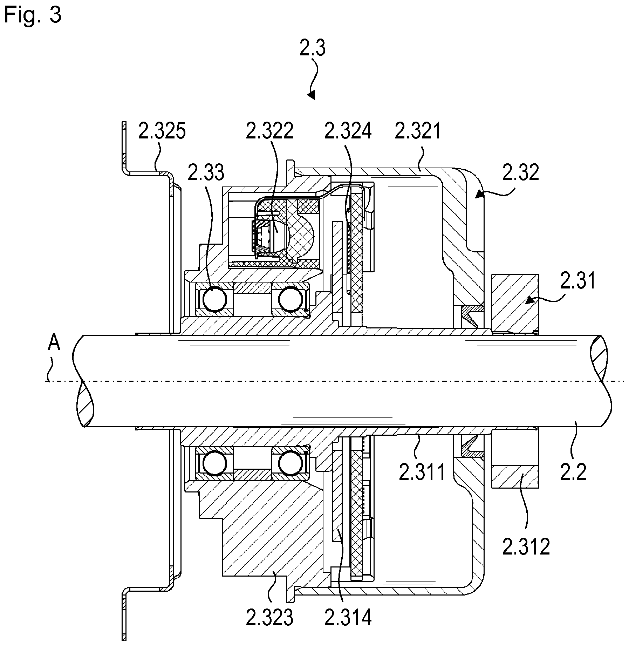

Die Winkelmesseinrichtung 2.3 ist am zweiten Flansch 1.2 mit der Trägerstruktur 1 verbunden. Die gezeigte Winkelmesseinrichtung 2.3 umfasst gemäß der Figur 3 eine erste Bauteilgruppe 2.31 und eine zweite Bauteilgruppe 2.32. Die erste Bauteilgruppe 2.31 weist eine Welle 2.311 auf, die im vorgestellten Ausführungsbeispiel als durchgehende Hohlwelle ausgestaltet ist, so dass in dieser der Stab 2.2 aufgenommen werden kann. Die Welle 2.311 weist ferner einen Absatz auf, an dem eine Maßverkörperung 2.314, z. B. durch eine Klebung, fest und nur mit geringen Toleranzabweichungen zentrisch bezüglich der Längsachse A verbunden ist. Die Maßverkörperung 2.314 besteht im vorgestellten Ausführungsbeispiel aus Glas und ist ringförmig ausgestaltet. Sie weist naturgemäß zwei Stirnflächen auf, wobei auf einer der Stirnflächen eine Winkelskalierung aufgebracht ist. Die Winkelskalierung kann beispielsweise als eine inkrementale Teilung mit radial orientierten Skalenstrichen ausgestaltet sein, wobei jedoch zusätzlich oder alternativ auch ein absoluter Code vorgesehen sein kann.

An der Welle 2.311 ist ein Klemmelement 2.312 vorgesehen, mit dessen Hilfe der Stab 2.2 klemmend verdrehsicher mit Welle 2.311 verbunden ist, so dass bei einer Drehbewegung des Stabes 2.2 eine Schwenkbewegung der Welle 2.311 erzeugt werden kann. Das Klemmelement 2.312 kann der ersten Bauteilgruppe 2.31 zugeordnet werden. Der Stab 2.2 ist demnach an dessen zweiter Verbindungsstelle mit der Winkelmesseinrichtung 2.3 verbunden, insbesondere mit der ersten Bauteilgruppe 2.31 beziehungsweise der Welle 2.311 der Winkelmesseinrichtung 2.3.

Die Welle 2.311 ist gemäß der Figur 3 innerhalb eines Körpers 2.323, welcher der zweiten Bauteilgruppe 2.32 zuzuordnen ist, durch zwei Wälzlager 2.33 drehbar gelagert. Weiterhin der zweiten Bauteilgruppe 2.32 zuzuordnen ist eine Lichtquelle 2.322, die beispielsweise eine LED und eine Kollimatorlinse umfasst, so dass durch die Lichtquelle 2.322 kollimiertes Licht emittiert wird. Dieses Licht tritt durch die Maßverkörperung 2.314 beziehungsweise deren Winkelskalierung hindurch und wird entsprechend der Winkelstellung zwischen der ersten Bauteilgruppe 2.31 und der zweiten Bauteilgruppe 2.32 beziehungsweise der Welle 2.311 und dem Körper 2.323 moduliert. Das modulierte Licht wird von einer Abtasteinrichtung 2.324, welche am Körper 2.323 befestigt ist, abgetastet. Entsprechende lichtempfindliche beziehungsweise photosensitive Detektoren befinden sich auf der als bestückte Leiterplatte ausgestalteten Abtasteinrichtung 2.324. Unter anderem umfasst die Abtasteinrichtung 2.324 auch elektronische Bauelemente zur Signalformung - beispielsweise zur Verstärkung und Digitalisierung - der von den Detektoren gelieferten Abtastsignale.

Um die Abtasteinrichtung 2.324 herum ist ein Gehäuse 2.321 montiert, so dass unter anderem die Lichtquelle 2.322, die Maßverkörperung 2.314 und die Abtasteinrichtung 2.324 gegenüber Umwelteinflüssen geschützt sind. Am Körper 2.323 ist eine zweite Ausgleichskupplung 2.325 befestigt. Im vorgestellten Ausführungsbeispiel ist die zweite Ausgleichskupplung 2.325 aus einem Blech gefertigt und insbesondere als einstückiges Stanz-Biegeteil hergestellt. Diese zweite Ausgleichskupplung 2.325 dient zur drehfesten Befestigung der Winkelmesseinrichtung 2.3 am zweiten Flansch 1.2 der Trägerstruktur 1. Die zweite Ausgleichskupplung 2.325 gleicht Axialbewegungen und Fluchtungsabweichungen (Radial- und Winkelversatz) zwischen der Winkelmesseinrichtung 2.3 und der Trägerstruktur 1 aus und ist aber torsionssteif.

Über ein in den Figuren nicht gezeigtes Anschlusskabel, welches an einer Buchse angeschlossen wird, wird eine elektrische Verbindung zwischen der Winkelmesseinrichtung 2.3 und einer Folgeelektronik hergestellt, so dass elektrische Signale und elektrische Energie zwischen der Folgeelektronik und der Winkelmesseinrichtung 2.3 übertragen werden können.

Durch die Winkelmesseinrichtung 2.3 kann also die relative Winkelstellung zwischen der ersten Bauteilgruppe 2.31 und der zweiten Bauteilgruppe 2.32 beziehungsweise zwischen der Welle 2.311 und dem Stab 2.2 bestimmt werden. Derartige Winkelmesseinrichtungen 2.3 werden auch häufig als Drehgeber bezeichnet.

Im Betrieb der Windkraftanlage werden die Rotorblätter 3 durch ihr Eigengewicht und durch aerodynamische Lasten verformt. Insbesondere können eingeprägte Lasten zu Torsionsbewegungen des Rotorblatts 3 um die Längsachse A führen. Durch diese Torsionsbewegungen wird die Trägerstruktur 1 verformt, was zur Folge hat, dass sich der Stab 2.2 relativ zum zweiten Flansch 1.2 verdreht. Diese Verdrehung um einen vergleichsweise geringen Winkelbetrag (im vorgestellten Ausführungsbeispiel ist die maximale Verdrehung etwa 120 Winkelminuten) wird von der Winkelmesseinrichtung 2.3 erfasst und es werden entsprechende Signale abgegeben. Somit führt also die ersten Bauteilgruppe 2.31 relativ zur zweiten Bauteilgruppe 2.32 Dreh- beziehungsweise Schwenkbewegungen nur in einem geringen Winkelbereich aus.

Wie in der Figur 2 gezeigt, kann die Messvorrichtung 2 zur Erfassung von Verformungen des Rotorblatts 3 auch mit einem Stab 2.2 ausgestaltet sein, der durch mehrere Winkelmesseinrichtung 2.3 beziehungsweise Wellen 2.311 hindurch geführt ist. Auch bei dieser Variante ist die Verwendung einer beziehungsweise mehrerer ersten Ausgleichskupplungen 2.1 vorgesehen. Durch die in Richtung der Längsachse A aneinandergereihten Winkelmesseinrichtungen 2.3 kann die Verdrehung beziehungsweise Torsion des Rotorblatts 3 für mehrere Abschnitte ermittelt werden.

Die Messvorrichtung 2 zur Erfassung von Verformungen des Rotorblatts 3 ist naturgemäß in einer Windkraftanlage großen Temperaturschwankungen ausgesetzt. Dennoch können durch die oben dargelegte Messvorrichtung 2 zur Erfassung von Verformungen überaus hohe Messgenauigkeiten auch unter diesen widrigen Umgebungsbedingungen erreicht werden. Dies liegt zum einen daran, dass durch die Erfassung von Winkellagen die thermische Ausdehnung der Maßverkörperung 2.314 kaum eine Rolle spielt (die Abstände zwischen den Skalierungsstrichen und deren Breite variieren mit der Temperatur, jedoch nicht die Winkellage). Zum anderen sind der Stab 2.2 und das Rotorblatt 3 aus dem gleichen Material hergestellt, so dass beide dasselbe thermische Ausdehnungsverhalten aufweisen. Schließlich kann durch das topfförmige elektrisch leitende Gehäuse 2.321 ein optimaler Schutz, insbesondere für die Abtasteinrichtung 2.324 und zugehöriger Elektronik, vor Überspannungen z. B. bei Gewittern gewährleistet werden.

Die von der Winkelmesseinrichtung 2.3 abgebbaren Signale sind vorteilhafterweise voll digital, so dass die oben genannte Folgeelektronik die Signale sämtlicher Messvorrichtungen 2 zur Erfassung von Verformungen der Rotorblätter ohne weitere Digitalisierung verarbeiten kann. Dies gewährleistet einerseits eine gegenüber äußeren Störungen sichere Signalübertragung, zum anderen können die Signale vergleichsweise einfach verarbeitet werden, so dass die gemessenen Verformungen in einem Regelkreis, z. B., zur (separaten) Regelung des Pitch-Winkels für jedes Rotorblatt 3 verwendet werden können.

## Patentansprüche

1. Baueinheit, die eine Trägerstruktur (1) und eine Messvorrichtung (2) umfasst, wobei die Messvorrichtung (2)
- eine erste Ausgleichskupplung (2.1),
- einen Stab (2.2) und
- eine Winkelmesseinrichtung (2.3) aufweist, wobei
die erste Ausgleichskupplung (2.1) drehsteif ausgebildet ist, der Stab (2.2) eine Längsachse (A) aufweist und die Winkelmesseinrichtung (2.3) eine erste Bauteilgruppe (2.31) und eine zweite Bauteilgruppe (2.32) umfasst, wobei die erste Bauteilgruppe (2.31) relativ zur zweiten Bauteilgruppe (2.32) um die Längsachse (A) drehbar angeordnet ist und die Winkelmesseinrichtung (2.3) so ausgestaltet ist, dass durch diese eine relative Winkellage der beiden Bauteilgruppen (2.31, 2.32) zueinander messbar ist, wobei
die erste Ausgleichskupplung (2.1) drehfest mit der Trägerstruktur (1) verbunden ist,
der Stab (2.2) drehfest mit der ersten Ausgleichskupplung (2.1) verbunden ist,
die erste Bauteilgruppe (2.31) drehfest mit dem Stab (2.2) verbunden ist und
die zweite Bauteilgruppe (2.32) drehfest mit der Trägerstruktur (1) verbunden ist,
so dass eine um die Längsachse (A) durch mechanische Belastung hervorgerufene Torsion der Trägerstruktur (1) bestimmbar ist durch Messung der relativen Winkellage der beiden Bauteilgruppen (2.31, 2.32) zueinander.

2. Baueinheit gemäß dem Anspruch 1, wobei der Stab (2.2) aus einem Material hergestellt ist, welches Kunststoff umfasst.

3. Baueinheit gemäß dem Anspruch 2, wobei der Kunststoff faserverstärkt ist.

4. Baueinheit gemäß einem der vorhergehenden Ansprüche, wobei die zweite Bauteilgruppe (2.32) der Winkelmesseinrichtung (2.3) eine zweite Ausgleichskupplung (2.325) aufweist, wobei die zweite Ausgleichskupplung (2.325) drehfest mit der Trägerstruktur (1) verbunden ist.

5. Baueinheit gemäß einem der vorhergehenden Ansprüche, wobei die Winkelmesseinrichtung (2.3) eine Maßverkörperung (2.314) und ein Element (2.324) zur Abtastung der Maßverkörperung (2.314) aufweist.

6. Baueinheit gemäß dem Anspruch 5, wobei das Element (2.324) zur Abtastung der Maßverkörperung (2.314) photosensitiv ist.

7. Baueinheit gemäß einem der vorhergehenden Ansprüche, wobei die Baueinheit mehrere Messvorrichtungen (2) aufweist, die insbesondere entlang der Längsachse (A) zueinander versetzt angeordnet sind.

8. Windkraftanlage mit einem Rotorblatt (3), die eine Baueinheit gemäß dem Anspruch 1 aufweist.

9. Windkraftanlage gemäß dem Anspruch 8, wobei der Stab (2.2) in Längsrichtung (x) des Rotorblatts (3) orientiert ist.

10. Windkraftanlage gemäß einem der Ansprüche 8 oder 9, wobei der Stab (2.2) den gleichen Wärmeausdehnungskoeffizienten aufweist wie das Rotorblatt (3).

## Claims

1. Structural unit, which comprises a support structure (1) and a measurement apparatus (2), wherein the measurement apparatus (2) has
- a first compensation coupling (2.1),
- a bar (2.2), and
- an angle measurement device (2.3), wherein
the first compensation coupling (2.1) is designed to be rotationally rigid, the bar (2.2) has a longitudinal axis (A), and the angle measurement device (2.3) comprises a first component group (2.31) and a second component group (2.32), wherein the first component group (2.31) is arranged so as to be rotatable about the longitudinal axis (A) relative to the second component group (2.32), and the angle measurement device (2.3) is configured such that, by way of this, it is possible for a relative angular position of the two component groups (2.31, 2.32) with respect to one another to be measured, wherein
the first compensation coupling (2.1) is connected rotationally conjointly to the support structure (1),
the bar (2.2) is connected rotationally conjointly to the first compensation coupling (2.1),
the first component group (2.31) is connected rotationally conjointly to the bar (2.2), and
the second component group (2.32) is connected rotationally conjointly to the support structure (1),
with the result that a torsion of the support structure (1) about the longitudinal axis (A) that is brought about by mechanical loading is able to be determined by measurement of the relative angular position of the two component groups (2.31, 2.32) with respect to one another.

2. Structural unit according to Claim 1, wherein the bar (2.2) is produced from a material which comprises plastic.

3. Structural unit according to Claim 2, wherein the plastic is fibre-reinforced.

4. Structural unit according to one of the preceding claims, wherein the second component group (2.32) of the angle measurement device (2.3) has a second compensation coupling (2.325), wherein the second compensation coupling (2.325) is connected rotationally conjointly to the support structure (1) .

5. Structural unit according to one of the preceding claims, wherein the angle measurement device (2.3) has a solid measure (2.314) and an element (2.324) for scanning the solid measure (2.314).

6. Structural unit according to Claim 5, wherein the element (2.324) for scanning the solid measure (2.314) is photosensitive.

7. Structural unit according to one of the preceding claims, wherein the structural unit has multiple measurement apparatuses (2) which are in particular arranged offset from one another along the longitudinal axis (A).

8. Wind power installation having a rotor blade (3) which has a structural unit according to Claim 1.

9. Wind power installation according to Claim 8, wherein the bar (2.2) is oriented in the longitudinal direction (x) of the rotor blade (3).

10. Wind power installation according to either of Claims 8 and 9, wherein the bar (2.2) has the same coefficient of thermal expansion as the rotor blade (3).

## Revendications

1. Unité structurelle, comprenant une structure porteuse (1) et un dispositif de mesure (2), le dispositif de mesure (2) présentant
- un premier accouplement compensateur (2.1),
- une barre (2.2) et
- un dispositif de mesure d'un angle (2.3),
le premier accouplement compensateur (2.1) étant réalisé de manière rigide en torsion, la barre (2.2) présentant un axe longitudinal (A) et le dispositif de mesure d'un angle (2.3) comprenant un premier groupe de composants (2.31) et un deuxième groupe de composants (2.32), le premier groupe de composants (2.31) étant disposé de manière à pouvoir tourner par rapport au deuxième group de composant (2.32) autour de l'axe longitudinal (A) et le dispositif de mesure d'angle (2.3) étant configuré de telle sorte qu'il permette de mesurer une position angulaire relative des deux groupes de composants (2.31, 2.32) l'un par rapport à l'autre,
le premier accouplement compensateur (2.1) étant connecté de manière solidaire en rotation à la structure porteuse (1),
la barre (2.2) étant connectée de manière solidaire en rotation au premier accouplement compensateur (2.1),
le premier groupe de composants (2.31) étant connecté de manière solidaire en rotation à la barre (2.2) et
le deuxième groupe de composants (2.32) étant connecte de manière solidaire en rotation à la structure (1),
de telle sorte qu'une tortion de la structure (1) autour de l'axe longitudinal (A), provoquée par une charge mécanique, puisse être déterminée par une mesure de la position angulaire relative des deux groupes de composants (2.31, 2.32) l'un par rapport à l'autre.

2. Unité structurelle selon la revendication 1, dans laquelle la barre (2.2) est fabriquée en un matériau qui comprend du plastique.

3. Unité structurelle selon la revendication 2, dans laquelle le plastique est renforcé par des fibres.

4. Unité structurelle selon l'une quelconque des revendications précédentes, dans laquelle le deuxième groupe de composants (2.32) du dispositif de mesure d'un angle (2.3) présente un deuxième accouplement compensateur (2.325), le deuxième accouplement compensateur (2.325) étant connecté de manière solidaire en rotation à la structure porteuse (1).

5. Unité structurelle selon l'une quelconque des revendications précédentes, dans laquelle le dispositif de mesure d'un angle (2.3) présente une mesure matérialisée (2.314) et un élément (2.324) pour le balayage de la mesure matérialisée (2.314).

6. Unité structurelle selon la revendication 5, dans laquelle l'élément (2.324) pour le balayage de la mesure matérialisée (2.314) est photosensible.

7. Unité structurelle selon l'une quelconque des revendications précédentes, l'unité structurelle présentant plusieurs dispositifs de mesure (2) qui sont notamment disposés de manière décalée les uns par rapport aux autres le long de l'axe longitudinal (A).

8. Éolienne comprenant une pale de rotor (3) qui présente une unité structurelle selon la revendication 1.

9. Éolienne selon la revendication 8, dans laquelle la barre (2.2) est orientée dans la direction longitudinale (x) de la pale de rotor (3).

10. Éolienne selon l'une quelconque des revendications 8 et 9, dans laquelle la barre (2.2) présente le même coefficient de dilatation thermique que la pale de rotor (3).
